(19) **Europäisches Patentamt**

**European Patent Office**

**Office européen des brevets**

(11) Publication number: **0 363 529 B1**

(12) ## EUROPEAN PATENT SPECIFICATION

(45) Date of publication of patent specification: **24.03.93** (51) Int. Cl.⁵: **A23F 5/26**, A23F 5/40

(21) Application number: **88309287.6**

(22) Date of filing: **05.10.88**

(54) **A process for hydrolyzing a partially extracted roasted and ground coffee.**

(30) Priority: **14.09.88 US 244205**

(43) Date of publication of application:
**18.04.90 Bulletin 90/16**

(45) Publication of the grant of the patent:
**24.03.93 Bulletin 93/12**

(84) Designated Contracting States:
**AT BE CH DE ES FR GB IT LI LU NL SE**

(56) References cited:
**EP-A- 0 216 971      DE-A- 2 056 082**
**GB-A- 2 018 560      US-A- 3 361 572**
**US-A- 3 529 968      US-A- 4 508 745**

(73) Proprietor: **KRAFT GENERAL FOODS, INC.**
**250 North Street**
**White Plains New York 10625(US)**

(72) Inventor: **Stahl, Howard Dave**
**2 Claremont Road**
**Scarsdale, New York 10583(US)**
Inventor: **Fulger, Charles Von**
**P.O.Box 631**
**Cockeyville, Maryland 21030(US)**
Inventor: **Turek, Evan Joel**
**197 Mayfair Road**
**Paramus, New Jersey 07652(US)**
Inventor: **Gibson, Thomas Aural**
**500 Saint Malo Ile Bizard**
**Ouebec H9C 9Z7(CA)**
Inventor: **Rankowitz, Marshall Miles**
**48 Sandpiper Drive, Englishtown**
**New Jersey 07726(US)**

(74) Representative: **Eyles, Christopher Thomas**
**W.P. THOMPSON & CO. High Holborn House**
**52-54 High Holborn**
**London WC1V 6RY (GB)**

Rank Xerox (UK) Business Services
(3.10/3.5x/3.0.1)

**Description**

TECHNICAL FIELD

The present invention relates to a method of solubilizing a partially extracted roasted and ground coffee. More particularly, the invention involves hydrolyzing a partially extracted roasted and ground coffee, such as the spent grounds from a commercial coffee percolation system, in a reactor by a high temperature short time process without the introduction of any added acid catalyst. A tubular plug flow reactor is convenient, although any reactor providing for the relatively high temperature, short time reaction will suffice. The time/temperature relationship is chosen to cause solubilization and then hydrolysis of the native mannan oligomers from a range of about DP 10 to DP 40 to a range of about DP 1 to DP 10, and sufficient to have controlled reaction of sugars to form coffee flavor, aroma and colors. The hydrolysate, thus obtained, is useful for increasing the level of soluble coffee solids, flavor and aroma in combination with an aqueous extract of roasted coffee, for example.

BACKGROUND ART

In the soluble coffee art there has boon a great deal of emphasis placed upon maximizing the solubles yield from roasted and ground coffee, most notably by varying percolation conditions. Early on in the development of instant coffee, in the pre-world War II period, solubles were leached out of roasted and ground coffee with boiling water to yield less than a 25% soluble solids yield. Morganthaler in U.S. Patent No. 2,324,526 utilizes temperatures of from 160 to 175°C (320 to 347°F) to achieve 27 percent solubles. Additionally, acid hydrolysis conditions were used to raise the overall yield to 50% solubles. As cited in "Coffee Technology" by Sivetz and Desrosier, 1979, at page 366, solubles yield from commerical percolation systems currently are in the range of from about 40 to about 50 percent from roasted and ground coffee. Even with the utilization of higher temperatures and pressures, higher yields from percolation are not realistic because of problems cited by Sivetz including compression of grounds, reduced flow and process rate and decreased quality of the instant coffee produced under these conditions. Specifically, extensive hydrolysis in a percolator will produce tars and off-flavors.

Hydrolyzing partially extracted coffee grounds, to obtain an increased solids yield, is well known in the art and has also been pursued as a means to increase soluble solids yield. For example, U.S. Pat. No. 2,573,406 to Clough et al. discloses a process for producing a soluble coffee which involves atmospherically extracting about 20% of the weight of the coffee, hydrolyzing a portion of the grounds in a suspension of about 1% sulphuric acid at 100°C for about one hour, adjusting the pH of the hydrolysate, filtering the hydrolysate, combining the same with the atmospheric extract and drying the combined extract. In another, similar process described in U.S. Pat. No. 2,687,355 to Benner et al., phosphoric acid is used in place of sulphuric acid. In still another process, disclosed in U.S. Pat. No. 3,244,879 to DiNardo et al., either alkaline or acid hydrolysis is carried out directly in the extraction train on coffee grounds that have been at least atmospherically extracted. Hydrolysis directly in the extraction train eliminates the separate hydrolysis step of the prior art processes and provides for adsorption of the alkaline or acid catalyst in the mass of spent coffee grounds.

More recently, Fulger et al. in U.S. Pat. No. 4,508,745 disclose a method for hydrolyzing a coffee extraction residue material to produce mannan oligomers from DP 1 to DP 10 by preparing a slurry of spent grounds at a concentration of 5% to 60% by weight, adjusting the pH to about 0.5 to 4.0, and reacting the slurry at a temperature of 160°C to 260°C for 6 seconds to 60 seconds. According to Fulger et al., the aforesaid method can achieve a soluble yield increase on the order of 30% by weight from a coffee extraction residue material, said residue material having been partly extracted, as for example the spent grounds from a commercial percolation system that have been atmospherically extracted and partly thermally hydrolyzed.

A second area of emphasis in the soluble coffee art is that of flavor and aroma of the finished soluble coffee product. Up to this time, the major factors for flavor and aroma development were the roasting process and the blend of coffee used. Conversion of coffee aroma by techniques such as steam or vacuum stripping, from the roast and ground coffee or from the extract, for later addition in the process, are well described in the art.

Sivetz and Desrosier (pp 250-251 of the above-cited work) indicate that desirable coffee flavor and aroma are attained at the desired degree of sugar pyrolysis and caramelization as monitored by the darkness of the color developed during roasting. Sucrose, which is about 7 percent of the green coffee, largely disappears during roasting to form the pyrolysis products. These can react further with prot-

2

EP 0 363 529 B1

einaceous and other degradation products to form other flavored coffee substances. The complicated chemistry described here is generally called non-enzymatic browning reactions. Two such reactions are caramelization, a process in which sugars alone are involved, and the Maillard reaction, in which reducing sugars react with amines, amino acids, peptides and proteins.

A more complete description of this chemistry is given in a review by J Hodge, entitled "Origin of Flavor in Foods: Nonenzymatic Browning Reactions" from a Symposium on Foods: The Chemistry and Physiology of Flavors, H Schultz, E Day and L Libbey, eds, AVI Pub. Comp. Inc. (1967). A second review by M Gianturco on "Coffee Flavor" in the same symposium describes the complexity of coffee flavor including volatiles described as the "aroma complex". One hundred and three volatile constituents are reported, many of which are clearly carbohydrate origin. Over five hundred compounds have been reported in a recent reference work of the Dutch institute CIVO entitled "Volatile Compounds in Food", Section #72: coffee, S Van Staten and H Marse eds., 5th edition TNO (1983), Zeist the Netherlands.

GB-A-2018560 (General Foods Limited) describes the extraction of roasted and ground coffee by a countercurrent multistage slurry extraction system. A hydrolysis stage of the system is an agitated pressure vessel which may be heated at up to 205°C and a pressure of 250 psia (1.72 M Pa).

US-A-3367572 (Nutting et al) describes a continuous method for recovering soluble coffee extract from roast ground coffee. The method includes a pressure extraction step in which an aqueous slurry of previously extracted grounds is subjected to a temperature of 360°F (182°C) and a pressure of 140 psig (1.07 M Pa).

There remains a need in the coffee art to provide a method for solubilizing a partially extracted roasted and ground coffee, containing mannan as the major carbohydrate, in a reactor under high temperature for a short period of time without the introduction of any added acid catalyst. Said method being sufficient to cause hydrolysis of the mannan factor from the native polymeric size to form a hydrolysate containing mannan oligomers possessing a polymer range suitable for drying as well as minimal precipitation or formation of sludges during standing or upon concentration.

This method will generate coffee aroma and flavor and coffee-like color, by controlled reaction of the carbohydrate oligomers with proteinaceous components liberated during the treatment. These flavors can enhance, extend, or modify the original flavor and aroma developed during the roasting process and which were removed earlier in the extraction process. This process seeks to optimize the time/temperature relationship in the reactor to achieve maximal soluble solids yield, and coffee flavor, aroma and color, with minimal tendency to produce sludges or precipitates upon concentration and further processing.

DISLCOSURE OF THE INVENTION

The present invention provides a method of solubilizing a partially extracted roasted and ground coffee and generating coffee flavors in a reactor, comprising:

(a) providing a slurry of the partially extracted roasted and ground coffee in a liquid, the slurry comprising a hydrated partially extracted roasted and ground coffee containing from 2% to 75% by weight partially extracted roasted and ground coffee, said partially extracted roasted and ground coffee having had a majority of the arabinogalactan extracted therefrom until a cumulative yield of from 35% to 55% dry basis, roasted and ground coffee has been rmeoved during said extraction;

(b) subjecting said hydrated partially extracted roasted and ground coffee to a temperature of from 200°C to 260°C for a period of time ranging from 1 minute to 15 minutes in a reactor in the absence of any added acid catalyst in order to achieve hydrolysis of said partially extracted roasted and ground coffee and effective to generate a 10% to 60% incremental yield (dry basis partially extracted roast and ground coffee) and effective to remove at least 50% of the mannan fraction, and effective to produce a hydrolysate containing a level of DP-1 oligomers of less than 50% and a level of less than 10% oligomers in excess of DP-6, both levels based upon the total hydrolysate solids generated, and to generate total aromatics in an amount exceeding 4,000 ppm including an amount of diacetyl in excess of 100 ppm;

(c) quenching the hydrolysis and browning reactions; and

(d) separating out soluble solids and aromas from the hydrolyzed partially extracted roasted and ground coffee.

Before proceeding to a detailed description of the invention, it is necessary to define some relevant terms:

"Mannan" as used herein refers broadly to any polysaccharide consisting of d-mannose units. The monosaccharide d-mannose is an aldohexose and an isomer of d-glucose, differing only by having the opposite spatial arrangement of the hydroxyl group nearest the carbonyl. The mannan found in the partially

3

EP 0 363 529 B1

extracted roasted and ground coffee may have up to 40 d-mannose units in the polysaccharide. Mannans of about DP 6 and below are water soluble and those above DP 10 are insoluble.

"Arabinogalactan" is a higher molecular weight polymer of several hundred sugar units. The main chain consists of galactose sugar units and the side chains contain arabinose and galactose sugar units. Similarly, "cellulose" refers broadly to the polymer consisting of repeating cellobiose units (two glucose units having a beta 1-4 linkage between them) which, in turn, may be hydrolyzed to glucose units. Thus, cellulose yields the monosaccharide glucose upon complete hydrolysis. Cellulose makes up much of the structural material of plants. A more complete discussion of cellulose and its properties is found in Conant, J. and Blatt, A. The Chemistry of Organic Compounds. N.Y., Macmillan, 1947, pp. 295-299.

"Oligomer" is intended to mean a polymer comprised of a relatively few number of monosaccharide units. Specifically, as used herein, oligomer refers to polymers consisting of less than 10 monosaccharide units. Mannose is referred to as an oligomer of DP 1 for convenience, although strictly speaking, an oligomer is typically comprised of more than one constituent unit.

"Degree of polymerization" or "DP" refers to the number of monosaccharide units that make up a given oligomer. Thus, a mannan oligomer of DP 4, for example, consists of 4 mannose units.

"Partially extracted roasted and ground coffee" is intended to mean roasted and ground coffee material that has been partly extracted, as for example, atmospherically extracted. Generally, extraction under atmospheric conditions removes caramel and browning products, native flavor components of roasted and ground coffee, caffeine, trigonelline, chlorogenic acid, ash, sugars, protein and coffee acids. A "partially extracted roasted and ground coffee" may also have had a percentage of the arabinogalactan extracted and preferably a majority of the arabinogalactan extracted therefrom. Moreover, a "partially extracted roasted and ground coffee" is intended also to include a roasted and ground coffee that has been hydrolyzed to the extent that a percentage of the mannans contained therein have been hydrolyzed along with the hydrolysis of arabinogalactan, proteins and other thermal condensation products. It is contemplated that a roasted and ground coffee that is about one third to one half mannan depleted is a "partially extracted roasted and ground coffee". This may be accomplished for example, by a limited thermal hydrolysis.

In a commercial coffee percolation system, roasted and ground coffee is extracted in a multisection, countercurrent extraction battery in which fresh water at a temperature in excess of about 175°C enters the section containing the most spent coffee (the coffee that has undergone the greatest extraction). Concentrated coffee extract is withdrawn from the section containing the freshest coffee. Said coffee obviously undergoes a compositional change during percolation. Table 1 illustrates the composition of roasted and ground coffee whereas Table 2 illustrates the composition of partially extracted roasted and ground coffee. While the overall percentage of carbohydrates remains approximately constant, the thermally hydrolyzed arabinogalactans are seen to be partially removed. So, the preferred partially extracted roasted and ground coffee is composed of about 45% by weight carbohydrates, over half of which is mannan. Also, the preferred partially extracted roasted and ground coffee is one resulting from the commercial extraction of roasted and ground coffee until at least a cumulative yield of from 35 to 55% (dry basis, roasted and ground coffee) is obtained therefrom.

Table 1

| Illustrative Composition of Roasted Coffee | | |
|---|---|---|
| Component | % By Weight (dry basis) | |
| polymeric carbohydrates | | 41 |
| arabinogalactan | 13 | |
| mannan | 20 | |
| cellulose | 8 | |
| protein | | 13 |
| caramel and browning products | | 13 |
| lipids | | 11 |
| inert material | | 9 |
| acids | | 6 |
| ash | | 4 |
| caffeine | | 2 |
| trigonelline | | 1 |

4

Table 2

| Illustrative Composition of Partially Extracted Roasted and Ground Coffee | | |
|---|---|---|
| Component | % By Weight (dry basis) | |
| polymeric carbohydrates | | 45 |
| arabinogalactan | 5 | |
| mannan | 25 | |
| cellulose | 15 | |
| lipids | | 25 |
| inert material | | 20 |
| protein | | 10 |

BRIEF DESCRIPTION OF THE DRAWINGS

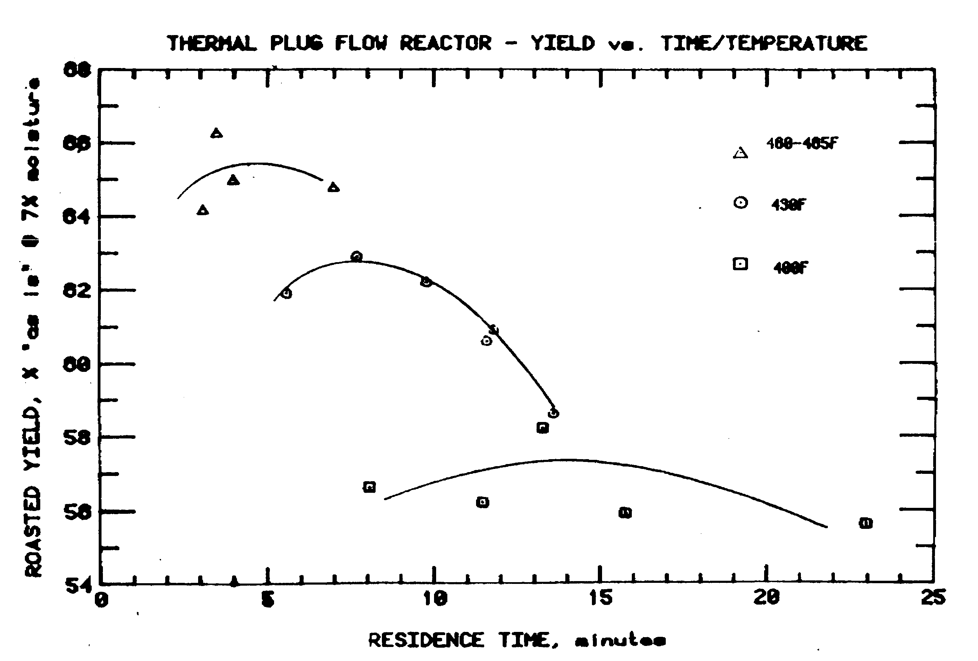

Figure 1 is a graph of percent soluble yield versus reaction time for the process of the present invention. The data presented therein is more fully discussed in Example 4.

BEST MODE FOR CARRYING OUT THE INVENTION

As to the details of the process of the present invention, the hydrated partially extracted roasted and ground coffee will contain from 2 to 75% by weight of the dry basis partially extracted and ground coffee in a liquid, typically water, prior to being fed to a reactor, preferably a plug flow reactor. The hydrated partially extracted roasted and ground coffee should be uniform, that is, it should be distributed evenly throughout. If it is made up in batch beforehand, steps should be taken to insure uniformity, such as recirculation by means of a slurry pump. If the hydrolysis reaction is to occur within a plug flow reactor, it is preferable to utilize a slurry which should be between 5 and 25% by weight, most preferably between 10% and 20% by weight, of the dry basis partially extracted and ground coffee. When utilizing the plug flow reactor, if the concentration of the slurry exceeds 25% by weight, the slurry becomes too thick to insure proper flow. In the event a different reactor, such as an extruder, is used, it is generally not necessary to prepare a slurry. For example, spent grounds from a conventional percolation system, typically containing between 65% and 80% by weight liquid, may be fed directly to such an extruder without further dilution. Spent grounds containing from 40% to 65% by weight liquid may also be used. Such grounds would have been partially dehydrated such as by screw pressing, air drying or other methods known in the art.

After the partially extracted roasted and ground coffee is hydrated or slurried, it is fed to a reactor. Suitable continuous reactors include those capable of promoting relatively high temperature, short time reactions, such as single or double screw extruders or plug flow tubular reactors. A suitable batch reactor is a so-called pressure containment vessel, for example an autoclave, or an explosion puffer wherein the coffee extraction residue material is placed in the reactor vessel which is then pressurized and heated, as with steam. The pressure is suddenly and explosively released, discharging the contents from the reactor vessel. The soluble solids are then leached from the material so discharged from said reactor vessel. The plug flow tubular reactors are especially convenient. A plug flow tubular reactor is essentially a cylindrical length of pipe in which a reaction can take place. An orifice or other suitable device, is placed on the discharge end of the reactor in order to control the pressure in the reactor as well as the rate of discharge from said reactor. "Plug flow" refers to the velocity profile of the slurry flowing through the reactor. Normally, a fluid exhibits a parabolic profile velocity wherein the fluid in the center of the conduit has a higher velocity than fluid flowing closer to the wall. In an ideal plug flow reactor, the velocity profile is flat, arising from the geometry of the vessel and the nature of the fluid thus assuring the same high temperature, short time reaction conditions for all material in the reactor by minimizing variations in residence time.

The elevated temperature is achieved in the reactor in any of several ways. For example, the slurry may be passed through a heat exchanger as a part of, or separate from the reactor chamber. Temperature may then be maintained by simply insulating the reactor. Alternatively, high pressure steam may be injected directly into the reactor as a means of raising the temperature. Although the steam may dilute the slurry somewhat, such heating is extremely rapid, permitting short reaction times. Selection of the preferred heating method, as well as sizing of the diameter of the reactor and orifice are all within the skill of a worker in the art, based on standard design principles.

The time/temperature conditions maintained within the reactor are, of course, critical in insuring that mannan hydrolysis will occur while producing desirable flavor and color through controlled reaction, and without causing significant insolubilization (e.g. tar formation).

Within the time/temperature conditions set forth above, process conditions are selected in order to produce a hydrolysate conforming to the following criteria: yield; flavor generation; and DP distribution such that the hydrolysate may be dried and such that the hydrolysate possesses minimal tar formation. The yield generated by the thermal hydrolysis process of the present invention is advantageously sufficient to result in a cumulative yield of from 55% to 73%, preferably from 65% to 73%,(dry basis, roast and ground coffee) when the hydrolysate is added to a conventional coffee extract. The process also generates total aromas in an amount exceeding 4000 ppm in the hydrolysate as measured by a purge and trap gas chromatography method. This aroma possesses a high level of desirable coffee-like flavors including pyrazines, diketones, aldehydes and sulfur containing compounds. The total aromas produced preferably contain less than 25% furfural. As is well known to one skilled in the art, excessive levels of furfural are recognized as producing a deleterious cereal-like note. Indicative of desirable coffee-like flavors are 2,3-pentanedione and diacetyl which are produced in considerable quantities by the process of the present invention. The process of the present invention produces in excess of 100 ppm diacetyl.

Finally the DP distribution must be such that the hydrolysate contains minimal amounts of mannan oligomers in excess of DP-6 which will produce precipitate. The hydrolysate contains less than 10% oligomers in excess of DP-6, preferably less than 5%. The hydrolysate must also contain a level of DP-1 less than 50% of the total hydrolysate solids generated, which are hygroscopic and difficult to dry; preferably less than 30% thereby allowing a combination of hydrolysate and coffee extract to be dried by conventional means, i.e. spray-drying, freeze-drying, drum drying, etc.

It has been found that the reaction temperature should be between 200°C and 260°C preferably from 210°C to 240°C, in order to solubilize and hydrolyze the mannan fraction to the desired range and produce the desired color, flavor and aroma. At least 50% of the mannan fraction is removed from the coffee residue, preferably 75% and more preferably 90%. The arabinogalactan fraction, if present, is solubilized more readily than the mannan fraction. Such temperatures correspond generally to a pressure in said reactor between 1.7 MPa and 4.1 MPa (17 atmospheres and 40 atmospheres), which is about the saturation pressure of the water in the slurry fed to the reactor.

The desired reaction time has been found to be between 1 minute and 15 minutes, preferably from 2 to 8 minutes, to effect said hydrolysis.

At any given temperature within the temperature range of the present inventive process, the mannan will be solubilized and hydrolyzed. Yields will increase with residence time up to a maximum and thereafter the yield will reduce as the oligomers degrade to produce either volatiles or insolubles i.e. tars or sludges. The kinetics of the present reaction will generally double with each 10°C rise in temperature. At the upper temperature range, the residence times must fall within the lower end of the specified time range; vice-versa, at the lower temperature range, the residence time must fall within the upper end of the time range.

Under the conditions of the present invention mannan polymers typically found in the crystalline and amorphous states and any residual arabinogalactan are solubilized and hydrolyzed to lower oligomers and monomers which undergo further chemical reactions, i.e., Maillard reactions and carmelization reactions to generate coffee flavors and coffee-like color.

As hereinbefore noted, the discharge end of the reactor and/or reactors may have an orifice thereon to control pressure within the reactor and control the rate of discharge. Passing the slurry through the orifice rapidly, reduces the pressure to which the slurry is subjected to about atmospheric. Such a rapid reduction of pressure causes expansion and evaporative cooling of the slurry thereby "quenching" or immediately terminating the hydrolysis and browning reactions. By so quenching the reaction, it is possible to control the hydrolysis reaction time to within the prescribed 1 to 15 minute period with great reliability.

Once the slurry is discharged from the plug flow tubular reactor, said slurry is cooled further and may then be separated into soluble solids and the remaining hydrolyzed partially extracted roasted and ground coffee. Such further cooling may occur by introduction into a flash tank. Vapor introduced into, or formed in, the flash tank contains condensible end noncondensible flavor aromas. These aromas are separated and proceed to a condensor. The condensible aromas are optionally condensed, recovered and used. Sold condensible aromas may be distilled if desired. In addition, the noncondensible aromas may be adsorbed in a liquid medium and optionally employed as aroma.

Separation may be by any method of solid-liquid separation known in the art. For example, said slurry may be filtered in order to remove the hydrolyzed partially extracted roasted and ground coffee therefrom. Alternatively, the slurry may be separated by centrifuging the slurry, as in a basket centrifuge.

The most important use of the soluble solids is the addition of the mixture to a conventional coffee extract in order to increase the amount of soluble coffee produced from the starting roasted and ground coffee. The process of the present invention will result in a 10% to 60% soluble solids incremental yield (dry basis, partially extracted roasted and ground coffee) which correlates to a cumulative yield of from 55% to 73% (dry basis, roasted and ground coffee). The soluble solids obtained by the present process may be added to the conventional coffee extract prior to drying said extract or the soluble solids may be dried and then combined with a soluble coffee produced from a conventional extract. Drying may be by any means known in the art, such as freeze-drying or spray-drying.

The following Examples illustrate certain embodiments of the present invention.

EXAMPLE 1

Decaffeinated partially extracted roasted and ground coffee from a commercial percolation system from which a yield of 50.6% (dry basis, starting roast and ground coffee) was achieved, were thermally processed in a 102mm x 12m (4" x 40') thermal plug flow reactor. A water and grounds slurry was made at a concentration of about 11% total solids and with high pressure steam, was introduced to the plug flow ractor. The slurry was exposed to 430°F (approx. 221°C) for 8 minutes in the reactor. In order to maintain a liquid form in the vessel, back pressure was applied through the use of 6.35mm (1/4") orifice. The material was then flashed to atmospheric pressure. The exiting slurry was filtered to recover the soluble solids. Said material exhibited a desirable coffee like color and flavor. This filtrate was concentrated to 41.2% solids in an evaporator and then frozen. The yield generated across the plug flow reactor was an incremental 11.6% (dry basis, R&G coffee), resulting in a combined yield of 62.2% from the two stage process. The soluble solids were quantitatively hydrolyzed to sugars and analyzed via high performance liquid chromatography (H.P.L.C.). The total amount of sugars was 74%. The remaining 26% of the soluble solids were predominately browning reaction products. This oligomer distribution by H.P.L.C. was the following:

| DP 1 | 24.8% |
|------|-------|
| DP 2 | 16.9% |
| DP 3 | 16.0% |
| DP 4 | 15.4% |
| DP 5 | 10.0% |
| DP 6 | 8.4% |
| DP 7 | 5.3% |
| DP 8 | 2.8% |

EXAMPLE 2

Partially extracted caffeinated roasted and ground (50% Robustas, 50% Columbian) coffee from a mild extraction process from which a yield of 35.6% (dry basis starting roasted and ground coffee) was achieved, were thermally processed in a 102mm x 12m (4" x 40') thermal plug flow reactor. The spent grounds were first milled to reduce the particle size to about 1 mm in order to better control feed slurry concentrations to the reactor. Said feed slurry concentrations were about 14% total solids. The slurry was pumped through the reactor at a rate corresponding to residence times of 8 minutes and maintained at 430°F (approx. 221°C) using a 6.35mm (1/4") orifice. The reaction was quenched by flashing to atmospheric pressure. The product slurry was filtered to separate the soluble from the insoluble solids. Conversions of the starting insoluble coffee solids to soluble coffee solids was 45.3% on a dry basis. This conversion relates to an incremental yield across the plug flow reactor of 29.2% and a total combined yield of 64.8% dry basis starting roasted and ground coffee. The carbohydrate present in the soluble and insoluble solids was quantitatively hydrolyzed to sugars and analyzed via H.P.L.C. The data appears in the table below and indicates that the soluble fraction had a carbohydrate concentration of 47.2%. The hydrolysate which had a medium brown color and basic coffee-like flavor was concentrated to 40-45% solids and combined with the concentrated coffee extract in proper ratio.

| % Carbohydrate (Dry Basis) | | | | | |
|---|---|---|---|---|---|
| | Glucose | Galactose | Arabinose | Mannose | Total |
| Partially Extracted R&G | 8.7 | 9.3 | 2.4 | 26.7 | 47.1 |
| Soluble Fraction | 1.6 | 12.1 | 0.0 | 33.5 | 47.2 |
| Residue | 17.2 | 0.0 | 0.0 | 4.7 | 21.9 |

EXAMPLE 3

Pressure dewatered spent coffee grounds (about 65% moisture) from a commercial percolation system in which typically a yield of 49-55% (dry basis starting roast and ground coffee) was achieved, were thermally treated in a modified Wenger brand extruder system. The equipment consisted of a live bottom bin with a twin screw auger that fed into a Wenger SX-80 (80 mm) single screw extruder. The outlet of the SX-80 fed into the inlet of a Wenger SX-110 (110 mm) single screw extruder. The SX-80 was fitted with feed screw sections, steamlocks and two electrically heated bands. The SX-80 functioned as a feeder, pre-heater, and vapor and material seal to the SX-110. The SX-110 was fitted with 4 larger electrically heated bonds (1.7-1.9 kW/ band), 15 screw sections, and 13 steamlocks and was divided into three different zones: feeding zone, heating zone, and reaction zone. The reaction zone contained four input taps and a hydraulically controlled conical die to maintain back pressure. A small amount of water (170 ml/min) was pumped into tap #1. The system achieved fairly uniform feed rates of 95.3 kg/hr (210 lb/hr). In a choked condition the spent grounds resided for 30 sec. in the feeding zone, 200 sec. in the heating zone, and 80 sec. in the reaction zone. The total residence time in the SX-110 was estimated to be 325 sec. (includes residence time of several sec. in a short transition zone between the heating zone and reaction zone). The heater bands were on maximal heat and a temperature of 400°F (approx. 204°C) was measured at the outlet (die) of the SX-110. The back pressure on the hydraulic die was 3.45 MPa (500 psi). It has been calculated that the spent ground were exposed to a temperature of about 435°F (approx. 224°C) for approximately 3 minutes. Upon leaving the extruder, the spent grounds were rapidly cooled by flashing to atmospheric pressure and the samples removed for analysis were further cooled with dry ice. The grounds were diluted with water and filtered. It was determined that 26% of the spent grounds were converted to soluble solids on a dry basis.

EXAMPLE 4

Caffeinated partially extracted roasted and ground coffee (100% Robustas) from a mild extraction process produced a yield of 44% (dry basis starting roasted and ground coffee). An experimental design was carried out on a 102mm x 12m (4" x 40') thermal plug flow reactor to determine the effect of reactor temperature and residence time on roasted yield. Three temperatures were explored: 460 (approx. 238°C), 430 (approx. 221°C) and 400°F (approx. 204°C). Residence times ranged from 2 to 23 minutes. Fig. 1 illustrates the results. The roasted yield numbers on the y-axis represent a total yield after a two step process (a mild extraction to a yield, then the plug flow reactor). Yields obtained were approximately 56% to 66% cumulative yield R&G coffee at a 7% moisture level (equal to 60% to 71% cumulative yield R&G coffee, dry basis) after processing. This objective was achieved for residence times ranging from approximately 3 to approximately 13 minutes at 204 to 238°C (400 to 460°F). Heating beyond this time at these temperatures decreases yield, indicating that long term treatments are not desirable.

EXAMPLE 5

The plug flow reactor extract that was produced in Example 2 was concentrated to 40-45% total solids and batched with the extract produced from the first, mild extraction stage. The two streams were combined according to the yield split.

<u>**Yield Split for Batching**</u>  <u>**Addback Fraction**</u>
**Mild Extraction  35.6%**     $\frac{35.6}{64.8} = 0.55$

**Thermal Plug Flow  29.2%**   $\frac{29.2}{64.8} = 0.45$

**Total Yield  64.8%**

In this Example, 55% of the solids of the final product were from the mild extraction step, while 45% of the solids was contributed by the thermal plug flow reactor. This mixed extract was then spray dried to produce a prototype.

An experienced coffee panel evaluated the product for its flavor and color attributes. The sample was judged to be of an acceptable brew color and was perceived as having coffee flavors typical to current commercial soluble coffees with no dilution flavor impact due to increased yield.

EXAMPLE 6

A series of comparative experiments were conducted in order to delineate the differences between acid hydrolysis of spent grounds (representative of the teachings of Fulger et al. U.S. Patent No. 4,508,745) as compared to the teachings of the present invention. Two types of partially extracted R&G coffee (spent grounds) were utilized. Type A grounds were representative of spent grounds from a commercial percolator system in which 57% yield (based on R&G coffee, dry basis) had been extracted. Type B grounds were representative of spent grounds from a pilot plant extractor in which 43% yield (based on R&G coffee, dry basis) had been extracted. A laboratory sized plug flow reactor was utilized as the reactor. The plug flow reactor used in this work was a laboratory sized reactor which consisted of a diaphram pump capable of pumping coffee grounds slurries of about 5% solids through a coil suspended into a electrically heated air fluidized sand bath. The sand bath is heated from below and the heat flows upward with the fluidized sand. The slurry containing 5% solids was heated indirectly and the sand bath was kept a few degrees higher than the slurry to get heat to flow or transfer. The residence time was defined by the volume of the coil and the flow rate of the slurry. Upon exiting the reactor the slurry was passed through a coil suspended in an ice bath and the reaction was quenched by cooling. The hydrolysate was separated from the residue (insoluble grounds). The hydrolysate was analyzed to determine DP distribution, yield and total aromatics.

In the acid catalyzed experiments (representative of the teachings of Fulger et al. U.S. Patent No. 4,508,745) 1% sulphuric acid, based upon the slurry weight was added to the slurry. After hydrolysis, the slurry was neutralized with calcium carbonate to pH 5.5 prior to filtering.

Table I below sets forth the data covering experimental runs utilizing acid catalyzed hydrolysis of partially extracted roast and ground coffee (spent grounds). Table II sets forth the data covering experimental runs representative of the thermal hydrolysis of partially extracted roast and ground coffee of the present invention.

ACID HYDROLYSIS OF SPENT GROUNDS

| Run | I | II | III |
|---|---|---|---|
| Reaction Time | 0.8 minutes<br>48 seconds | 0.25 minutes<br>15 seconds | 0.84 minutes<br>50 seconds |
| Reaction Temp. (°C) | 202 | 202 | 202 |
| Type Grounds | B | A | A |
| Total Aromatics (ppm) | 3,150 | 398 | 2,590 |
| **Flavor Components (ppm)** | | | |
| Diacetyl | 8 | 24 | 6 |
| 2-3 Pentanedione | 4 | 2 | 0 |
| Furfural | 2,087 | 293 | 2,122 |
| % Furfural of Total Aromatics | 66% | 74% | 82% |
| DP-1<br>(% DP-1 of total hydrolysate solids) | 82% | 80.4% | 71.8% |
| **Yield (%)** | | | |
| Incremental<br>(dry basis, R&G coffee) | 27.3% | 15.7% | 16.1% |
| Cumulative<br>(dry basis, R&G coffee) | 70.3% | 72.7% | 73.1% |

EP 0 363 529 B1

**TABLE II**

**THERMAL HYDROLYSIS OF SPENT GROUNDS**

| Run | I | II | III | IV | V | VI | VII | VIII | IX | X |
|---|---|---|---|---|---|---|---|---|---|---|
| Reaction Time | 3.2 | 2.0 | 1.1 | 11.2 | 6.7 | 11 | 7.8 | 3.7 | 2.4 | 1.2 |
| Reaction Temp. (°C) | 229 | 229 | 247 | 202 | 201 | 225 | 227 | 227 | 231 | 250 |
| Type Grounds | B | B | B | B | B | A | A | A | A | A |
| Total Aromatics (ppm) | 5,360 | 5,404 | 6,291 | 13,303 | 5,134 | 45,400 | 36,100 | 4,030 | 7,208 | 7,132 |
| **Flavor Components (ppm)** | | | | | | | | | | |
| Diacetyl | 242 | 145 | 184 | 400 | 110 | 3452 | 3256 | 312 | 408 | 417 |
| 2-3 Pentanedione | 58 | 54 | 76 | 194 | 45 | 1348 | 1074 | 84 | 160 | 192 |
| Furfural | 869 | 262 | 288 | 1114 | 302 | 7455 | 7508 | 490 | 322 | 268 |
| % Furfural of Total Aromatics | 16.2% | 4.8% | 4.6% | 8.4% | 5.9% | 16.4% | 20.8% | 12.2% | 4.5% | 3.8% |
| DP-1 (% DP-1 of total hydrolysate solids) | 15.1% | 8.8% | 10% | 23% | 8.0% | 0.8% | 25.6% | 11.8% | 7.4% | 7.9% |
| **Yield (%)** | | | | | | | | | | |
| Incremental (dry basis, R&G coffee) | 27.3% | 25.3% | 25.8% | 25.4% | 22% | 9.6% | 9.1% | 16.1% | 12.4% | 13.1% |
| Cumulative (dry basis, R&G coffee) | 70.3% | 68.3% | 68.8% | 68.4% | 65.0% | 66.6% | 66.1% | 73.1% | 69.6% | 70.1% |

As can be seen from the reported results, acid hydrolysis conditions generate lower levels of total aromatics. Of the aromatics produced, a high percentage of furfural is present in the total aromatics, in all reported cases greater than 66%. Low levels of diacetyl and 2-3 pentanedione were generated. The acid hydrolysis produced a product containing a high level of DP-1 oligomer. In the reported instances all concentrations of DP-1 exceeded 70%, making these hydrolysates difficult to spray dry when combined with conventional coffee extracts.

The process of the process invention in all instances produced hydrolysates containing below 30% DP-1 oligomers. The thermal hydrolysis conditions of the present invention also produced significantly greater amounts of total aromatics and importantly the aromatics contained in all instances less than 21% furfural

11

EP 0 363 529 B1

as a total percentage of the aromatics. Much higher levels of diacetyl and 2-3 pentanedione were produced by thermal hydrolysis as compared to acid hydrolysis. Diacetyl and 2-3 pentanedione are examples of desirable coffee flavor notes.

**Claims**

1. A method of solubilizing a partially extracted roasted and ground coffee and generating coffee flavors and colors in a reactor, comprising:

   (a) providing a slurry of the partially extracted roasted and ground coffee in a liquid, the slurry comprising a hydrated partially extracted roasted and ground coffee containing from 2% to 75% by weight partially extracted roasted and ground coffee, said partially extracted roasted and ground coffee having had a majority of the arabinogalactan extracted therefrom until a cumulative yield of from 35% to 55% dry basis, roasted and ground coffee has been removed during said extraction;

   (b) subjecting said hydrated partially extracted roasted and ground coffee to a temperature of from 200°C to 260°C for a period of time ranging from 1 minute to 15 minutes in a reactor in the absence of any added acid catalyst in order to achieve hydrolysis of said partially extracted roasted and ground coffee and effective to generate a 10% to 60% incremental yield (dry basis partially extracted roast and ground coffee) and effective to remove at least 50% of the mannan fraction, and effective to produce a hydrolysate containing a level of DP-1 oligomers of less than 50% and a level of less than 10% oligomers in excess of DP-6, both levels based upon the total hydrolysate solids generated, and to generate total aromatics in an amount exceeding 4,000 ppm including an amount of diacetyl in excess of 100 ppm;

   (c) quenching the hydrolysis and browning reactions; and

   (d) separating out soluble solids and aromas from the hydrolyzed partially extracted roasted and ground coffee.

2. A method according to claim 1, wherein the pressure within the reactor is from 17 to 40 atmospheres (1.7 to 4.1 MPa).

3. A method according to claim 1 or 2, wherein the quenching of the hydrolysis reaction is accomplished by discharging the hydrolyzed partially extracted roasted and ground coffee of step (b) from the reactor and rapidly reducing the pressure to atmospheric.

4. A method according to any preceding claim, wherein at least 75% of the mannan fraction is removed during hydrolysis.

5. A method according to claim 4, wherein at least 90% of the mannan fraction is removed during hydrolysis.

6. A method according to any preceding claim, wherein the hydrated partially extracted roasted and ground coffee material is a slurry between 5% and 25% by weight partially extracted roasted and ground coffee.

7. A method according to claim 6, wherein the slurry is between 10% and 20% by weight partially extracted roasted and ground coffee.

8. A method according to any preceding claim, wherein the reactor is a plug flow tubular reactor.

9. A method according to any preceding claim, wherein the reactor is an extruder.

10. A method according to any preceding claim, wherein the said time is from 2 minutes to 8 minutes.

11. A method according to any preceding claim, wherein the temperature in the reactor is from 210° to 240°C.

12. A method according to any preceding claim, including the step of combining the soluble solids which have been separated from the hydrolyzed partially extracted roasted and ground coffee with a conventional coffee extract and drying the combination.

12

EP 0 363 529 B1

13. A method according to any of claims 1 to 11, including the steps of drying the separated soluble solids and combining said dried solids with a soluble coffee.

14. A method according to claim 12 or 13, correlating to a cumulative yield of from 55% to 73% dry basis, roasted and ground coffee.

15. A method according to claim 14, wherein the cumulative yield is from 65% to 73%.

16. A method according to any preceding claim, wherein the partially extracted roasted and ground coffee has been subjected to atmospheric extraction which has extracted native flavor components of roasted and ground coffee, caffeine, trigonelline, chlorogenic acid, ash, sugars, protein, coffee acids and caramel and browning products.

17. A method according to any preceding claim, wherein the hydrolysate contains a level of DP-1 oligomers of less than 30% and a level of oligomers in excess of DP-6 of less than 5%.

18. A method according to any preceding claim, wherein the total aromatics produced contains less than 25% furfural.

**Patentansprüche**

1. Verfahren zum Solubilisieren eines teilweise extrahierten gerösteten und gemahlenen Kaffees und zum Erzeugen von Kaffeegeschmack und -farbe in einem Reaktor, bei dem man
(a) eine Aufschlämmung des teilweise extrahierten gerösteten und gemahlen Kaffees in einer Flüssigkeit herstellt, wobei die Aufschlämmung einen hydratisierten, teilweise extrahierten gerösteten und gemahlenen Kaffee enthält, der 2 bis 75 Gew.-% teilweise extrahierten gerösteten und gemahlenen Kaffee enthält, wobei aus dem teilweise extrahierten gerösteten und gemahlenen Kaffee ein Hauptteil des Arabinogalaktans extrahiert ist, bis während dieser Extraktion eine kumulative Ausbeute von 35 bis 55 % an geröstetem und gemahlenen Kaffee auf Trockenbasis entfernt worden ist;
(b) den hydratisierten, teilweise extrahierten gerösteten und gemahlenen Kaffee über einen Zeitraum von 1 Minute bis 15 Minuten in einem Reaktor in Abwesenheit von jeglichem sauren Katalysator einer Temperatur von 200 bis 260 °C aussetzt, um Hydrolyse des teilweise extrahierten gerösteten und gemahlenen Kaffees zu erreichen und um das Erzeugen eines 10 bis 60-prozentigen Ausbeutezuwachses (teilweise extrahierter und gerösteter und gemahlener Kaffee auf Trockenbasis) zu bewirken und das Entfernen von mindestens 50 % der Mannan-Fraktion zu bewirken und um das Erzeugen eines Hydrolysats zu bewirken, welches einen Gehalt von DP-1-Oligomeren von weniger als 50 % und einen Gehalt von weniger als 10 % Oligomeren oberhalb von DP-6 aufweist, wobei beide Gehalte bezogen sind auf die gesamten erzeugten Hydrolysatfeststoffe, und um Gesamt-Aromastoffe in einer Menge von mehr als 4.000 ppm zu erzeugen unter Einschluß einer Menge von Diacetyl von mehr als 100 ppm;
(c) die Hydrolyse und die Bräunungsreaktionen quencht; und
(d) lösliche Feststoffe und Aromen aus dem hydrolisierten, teilweise extrahierten gerösteten und gemahlenen Kaffee abtrennt.

2. Verfahren nach Anspruch 1, wobei der Druck in dem Reaktor 17 bis 40 Atmosphären (1,7 bis 4,1 MPa) beträgt.

3. Verfahren nach Anspruch 1 oder 2, wobei man das Quenchen der Hydrolysereaktion bewerkstelligt durch Austragen des hydrolisierten, teilweise extrahierten gerösteten und gemahlenen Kaffees von Schritt (b) aus dem Reaktor und schnelles Vermindern des Drucks auf atmosphärischen Druck.

4. Verfahren nach einem der vorhergehenden Ansprüche, wobei man während der Hydrolyse mindestens 75 % der Mannan-Fraktion entfernt.

5. Verfahren nach Anspruch 4, wobei man während der Hydrolyse mindestens 90 % der Mannan-Fraktion entfernt.

13

6. Verfahren nach einem der vorhergehenden Ansprüche, wobei das hydratisierte, teilweise extrahierte geröstete und gemahlene Kaffeematerial eine Aufschlämmung zwischen 5 und 25 Gew.-% an teilweise extrahiertem gerösteten und gemahlenen Kaffee ist.

7. Verfahren nach Anspruch 6, wobei die Aufschlämmung zwischen 10 und 20 Gew.-% an teilweise extrahiertem gerösteten und gemahlenen Kaffee ist.

8. Verfahren nach einem der vorhergehenden Ansprüche, wobei der Reaktor ein Röhrenreaktor mit idealer Strömung ist.

9. Verfahren nach einem der vorhergehenden Ansprüche, wobei der Reaktor ein Extruder ist.

10. Verfahren nach einem der vorhergehenden Ansprüche, wobei die Zeit 2 bis 8 Minuten beträgt.

11. Verfahren nach einem der vorhergehenden Ansprüche, wobei die Temperatur im Reaktor 210 bis 240 °C beträgt.

12. Verfahren nach einem der vorhergehenden Ansprüche unter Einschluß des Schritts, daß man die löslichen Festanteile, die vom hydrolisierten, teilweise extrahierten gerösteten und gemahlenen Kaffee abgetrennt worden sind, mit einem herkömmlichen Kaffeeextrakt kombiniert und die Kombination trocknet.

13. Verfahren nach einem der Ansprüche 1 bis 11 unter Einschluß des Schritts, daß man die abgetrennten löslichen Festanteile trocknet und die getrockneten Festanteile mit einem löslichen Kaffee kombiniert.

14. Verfahren nach Anspruch 12 oder 13 entsprechend einer kumulativen Ausbeute von 55 bis 73 % geröstetem und gemahlenen Kaffee auf Trockenbasis.

15. Verfahren nach Anspruch 14, wobei die kumulative Ausbeute 65 bis 73 % beträgt.

16. Verfahren nach einem der vorhergehenden Ansprüche, bei dem der teilweise extrahierte geröstete und gemahlene Kaffee einer atmosphärischen Extraktion unterworfen worden ist, bei der native Geschmackskomponeten des gerösteten und gemahlenen Kaffees, Coffein, Trigonellin, Chlorogensäure, Asche, Zucker, Protein, Coffeinsäuren und Karamel und Bräunungsprodukte extrahiert worden sind.

17. Verfahren nach einem der vorhergehenden Ansprüche, wobei das Hydrolysat einen Gehalt an DP-1-Oligomeren von weniger als 30 % und einen Gehalt von Oligomeren oberhalb von DP-6 von weniger als 5 % enthält.

18. Verfahren nach einem der vorhergehenden Ansprüche, wobei die gesamten erzeugten Aromastoffe weniger als 25 % Furfural enthalten.

**Revendications**

1. Procédé de solubilisation d'un café torréfié et moulu, partiellement extrait, et de production d'arômes et de couleurs de café dans un réacteur, comprenant :
   (a) l'apport d'une suspension épaisse du café torréfié et moulu, partiellement extrait, dans un liquide, la suspension épaisse comprenant un café torréfié et moulu, partiellement extrait, hydraté, contenant de 2 à 75 % en poids de café torréfié et moulu, partiellement extrait, la majeure partie de l'arabinogalactane ayant été extrait dudit café torréfié et moulu, partiellement extrait, jusqu'à ce qu'ait été retiré un rendement cumulatif de 35 % à 55 % de café torréfié et moulu, bilan à sec, durant ladite extraction,
   (b) la soumission dudit café torréfié et moulu, partiellement extrait, hydraté, à une température comprise entre 200°C et 260°C pendant une durée comprise entre 1 min et 15 min, dans un réacteur, en l'absence d'addition d'un catalyseur acide quelconque, pour obtenir l'hydrolyse dudit café torréfié et moulu, partiellement extrait, et efficace pour produire un rendement supplémentaire de 10 % à 60 % (café torréfié et moulu, partiellement extrait, bilan à sec) et efficace pour retirer au moins 50 % de la fraction de mannane, et efficace pour produire un hydrolysat contenant une concentration d'oligomères ayant un degré de polymérisation de 1 inférieure à 50 % et une concentration d'oligomères ayant un degré de polymérisation supérieur à 6 inférieure à 10 %, les deux concentrations reposant sur les solides totaux produits de l'hydrolysat et pour produire des substances aromatiques totales en une quantité supérieure à 4 000 ppm, comprenant une quantité de diacétyle supérieure à 100 ppm;

(c) arrêter les réactions d'hydrolyse et de brunissement ; et

(d) séparer les solides solubles et les arômes du café torréfié et moulu, partiellement extrait, hydrolysé.

2. Procédé selon la revendication 1, dans lequel la pression à l'intérieur du réacteur est comprise entre 17 et 40 atmosphères (1,7 à 4,1 MPa).

3. Procédé selon la revendication 1 ou 2, dans lequel l'arrêt de la réaction d'hydrolyse est effectué par décharge du café torréfié et moulu, partiellement extrait, hydrolysé, de l'étape (b) du réacteur et abaissement rapide de la pression à la pression atmosphérique.

4. Procédé selon l'une quelconque des revendications précédentes, dans lequel 75 % au moins de la fraction de mannane sont retirés durant l'hydrolyse.

5. Procédé selon la revendication 4, dans lequel 90 % au moins de la fraction de mannane sont retirés durant l'hydrolyse.

6. Procédé selon l'une quelconque des revendications précédentes, dans lequel la substance café torréfié et moulu, partiellement extrait, hydraté, est une suspension épaisse contenant entre 5 % et 25 % en poids de café torréfié et moulu, partiellement extrait.

7. Procédé selon la revendication 6, dans lequel la suspension épaisse contient entre 10 et 20 % en poids de café torréfié et moulu, partiellement extrait.

8. Procédé selon l'une quelconque des revendications précédentes, dans lequel le réacteur est un réacteur tubulaire à écoulement idéal.

9. Procédé selon l'une quelconque des revendications précédentes, dans lequel le réacteur est une boudineuse.

10. Procédé selon l'une quelconque des revendications précédentes, dans lequel ladite durée est comprise entre 2 min et 8 min.

11. Procédé selon l'une quelconque des revendications précédentes, dans lequel la température à l'intérieur du réacteur est comprise entre 210°C et 240°C.

12. Procédé selon l'une quelconque des revendications précédentes, comprenant l'étape de combinaison des solides solubles séparés du café torréfié et moulu, partiellement extrait, hydrolysé, avec un extrait de café conventionnel et le séchage de la combinaison.

13. Procédé selon l'une quelconque des revendications 1 à 11, comprenant les étapes de séchage des solides solubles séparés et la combinaison desdits solides séchés avec un café soluble.

14. Procédé selon la revendication 12 ou 13, se corrélant à un rendement cumulé de 55 % à 73 % de café torréfié et moulu, bilan à sec.

15. Procédé selon la revendication 14, dans lequel le rendement cumulé est compris entre 65 % et 73 %.

16. Procédé selon l'une quelconque des revendications précédentes, dans lequel le café torréfié et moulu, partiellement extrait, a été soumis à une extraction atmosphérique qui a extrait des composants aromatiques natifs du café torréfié et moulu, de la caféine, de la trigonelline, de l'acide chlorogénique, des cendres, des sucres, des protéines, des acides caféiques et du caramel et des produits de brunissement.

17. Procédé selon l'une quelconque des revendications précédentes, dans lequel l'hydrolysat contient une concentration d'oligomères ayant un degré de polymérisation de 1 inférieure à 30 % et une concentration d'oligomères ayant un degré de polymérisation supérieur à 6 inférieure à 5 %.

18. Procédé selon l'une quelconque des revendications précédentes, dans lequel les substances aromatiques totales produites contiennent moins de 25 % de furfural.

16

THERMAL PLUG FLOW REACTOR – YIELD vs. TIME/TEMPERATURE

RESIDENCE TIME, minutes

ROASTED YIELD, % as is" @ 7% moisture